# EUROPEAN PATENT APPLICATION

(11) **EP 4 020 684 A1**
(43) Date of publication of application: **29.06.2022**
(21) Application number: 21763918.6
(22) Date of filing: 09.02.2021
(51) Int. Cl.: H01M 50/20

(54) **BATTERY MODULE AND MANUFACTURING METHOD THEREFOR**

(30) Priority: 06.03.2020 KR 20200028574
(71) Applicant: LG ENERGY SOLUTION, LTD., Seoul 07335 (KR)
(72) Inventor: PARK, Subin, Daejeon 34122 (KR); SEONG, Junyeob, Daejeon 34122 (KR); PARK, Junkyu, Daejeon 34122 (KR); PARK, Won Kyoung, Daejeon 34122 (KR)
(74) Representative: Plasseraud IP
(86) International application number: PCT/KR2021/001744
(87) International publication number: WO 2021/177618

(57) **Abstract**

The present disclosure relates to a battery module that prevents a swelling of battery cells, and a method for manufacturing the same. The battery module according to an embodiment of the present disclosure includes a battery cell stack in which a plurality of battery cells are stacked, a first frame which is formed of a lower surface, and left and right surfaces to cover a lower surface and left and right surfaces of the battery cell stack; and a second frame of which an upper surface, and front, rear, left and right surfaces are integrally formed to cover an upper surface and front and rear surfaces of the battery cell stack, and the left and right surfaces of the first frame.

## Description

### [TECHNICAL FIELD]

### Cross Citation with Related Application(s)

This application claims the benefit of Korean Patent Application No. 10-2020-0028574 filed on March 6, 2020 in the Korean Intellectual Property Office, the disclosure of which is incorporated herein by reference in its entirety.

The present disclosure relates to a battery module and a method for manufacturing the same, and more particularly, to a battery module that prevents a swelling of battery cells, and a method for manufacturing the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, it is common to configure a battery module composed of battery cells first, and then configure a battery pack by using at least one of the battery modules and adding other components.

The battery module includes a battery cell stack in which a plurality of battery cells are stacked, and a frame for housing the battery cell stack.

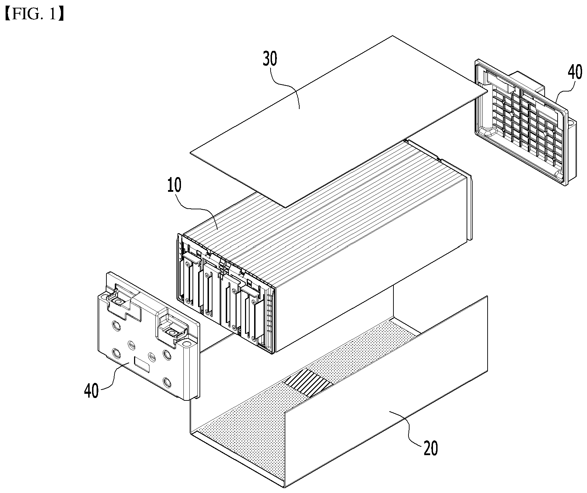

FIG. 1 is a view showing a conventional battery module including a U-shaped frame

Referring to FIG. 1, conventionally, the frames for covering the battery cell stack 10 are formed of a U-shaped frame 20 for covering a lower surface, and both side surfaces of the battery cell stack 10, an upper plate 30 for covering the upper surface of the battery cell stack 10, and end plates 40 for covering the front and rear surfaces of the battery cell stack 10. During charge and discharge of the battery cells, a swelling phenomenon may occur in which the battery cells swell up, and when the swelling phenomenon occurs, both side surfaces of the U-shaped frame 20 formed in the stacking direction of the battery cell stack 10 may receive pressure due to swelling. At this time, there is a problem that the swelling pressure of the battery cells must be withstood by only both side surfaces of the U-shaped frame 20 formed with a single layer.

### [DETAILED DESCRIPTION OF THE INVENTION]

### [Technical Problem]

It is an object of the present disclosure to provide a battery module having a frame structure that can withstand a swelling of battery cells when it occurs, and a method for manufacturing the same.

The objects of the present disclosure are not limited to the aforementioned objects, and other objects which are not described herein should be clearly understood by those skilled in the art from the following detailed description.

### [Technical Solution]

In order to achieve the above object, according to one embodiment of the present disclosure, there is provided a battery module comprising: a battery cell stack in which a plurality of battery cells are stacked, a first frame which is formed of a lower surface, and left and right surfaces to cover a lower surface and left and right surfaces of the battery cell stack; and a second frame of which an upper surface, and front, rear, left and right surfaces are integrally formed to cover an upper surface and front and rear surfaces of the battery cell stack, and the left and right surfaces of the first frame.

In order to achieve the above object, according to another embodiment of the present disclosure, there is provided a method for manufacturing a battery module, the method comprising steps of: assembling a battery cell stack on a first frame formed of a lower surface and left and right surfaces; assembling a second frame, of which the upper surface and the front, rear, left and right surfaces are integrally formed, so as to cover the upper surface and the front and rear surfaces of the battery cell stack and the left and right surfaces of the first frame; and weld-coupling the first frame and the second frame.

Lower ends of the left and right surfaces of the first frame and lower ends of the left and right surfaces of the second frame, and front and rear ends of the lower surface of the first frame and lower ends of the front and rear surfaces of the second frame may be coupled by welding.

Thicknesses of frame surfaces of the first frame and the second frame may be identical to each other.

A guide may be formed to be protruded at lower ends of the left and right surfaces of the first frame, a guide insertion part, into which the guide is inserted, may be formed to be recessed at lower ends of the left and right surfaces of the second frame corresponding to the guide, and the guide may be inserted into the guide insertion part.

The left and right surfaces of the first frame and the left and right surfaces of the second frame may be arranged so as to be perpendicular to the stacking direction of the battery cell stack.

The upper surface of the second frame may be formed wider than the lower surface of the first frame.

The first frame and the second frame may be formed by a pressing process.

In in the step of weld-coupling the first frame and the second frame, lower ends of the left and right surfaces of the first frame and lower ends of the left and right surfaces of the second frame, and front and rear ends of the lower surface of the first frame and lower ends of the front and rear surfaces of the second frame may be welded.

### [ADVANTAGEOUS EFFECTS]

A battery module and a method for manufacturing the same according to an embodiment of the present disclosure employ a double frame structure in the direction in which swelling occurs, thereby providing the effect capable of preventing swelling without a separate additional structure.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is a view showing a conventional battery module including a U-shaped frame.
FIG. 2 is an exploded perspective view showing a battery module according to an embodiment of the present disclosure.
FIG. 3 is a view showing a state in which the battery module according to an embodiment of the present disclosure is assembled.
FIG. 4 shows section A-A of FIG. 3 and is a cross-sectional view of the battery module according to an embodiment of the present disclosure.
FIG. 5 is a view showing a battery module according to another embodiment of the present disclosure.
FIG. 6 is a view showing a state in which a battery cell stack is assembled to a first frame in accordance with an embodiment of the present disclosure.
FIG. 7 is a view showing a state in which the second frame is assembled to the structure assembled through FIG. 6.
FIG. 8 is a view showing a state in which the first and second frames are coupled by welding the structure assembled through FIG. 7.

### [DETAILED DESCRIPTION OF THE EMBODIMENTS]

It should be appreciated that the exemplary embodiments, which will be described below, are illustratively described to help understand the present disclosure, and the present disclosure may be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, constitutional elements, movements, parts or combinations thereof, but it should be understood that they do not preclude a possibility of existence or addition of one or more other features, numbers, steps, movements, constitutional elements, parts or combinations thereof.

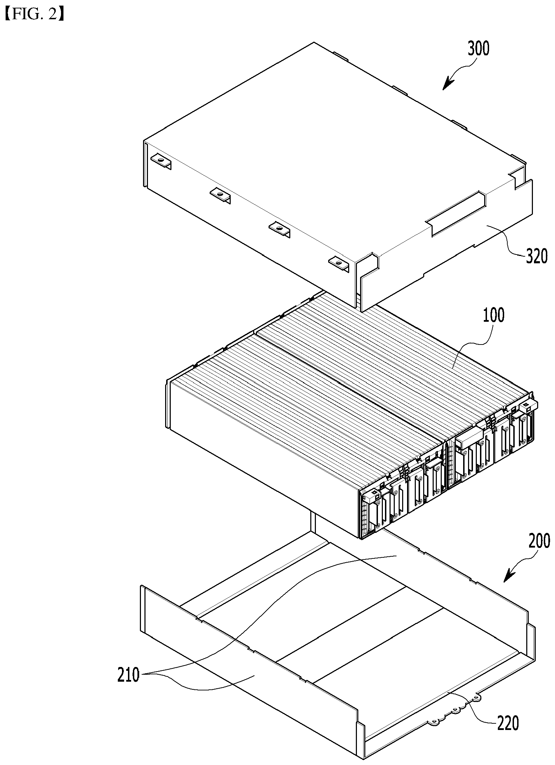

Hereinafter, a battery module according to the embodiments of the present disclosure will be described with reference to FIGS. 2 to 5.

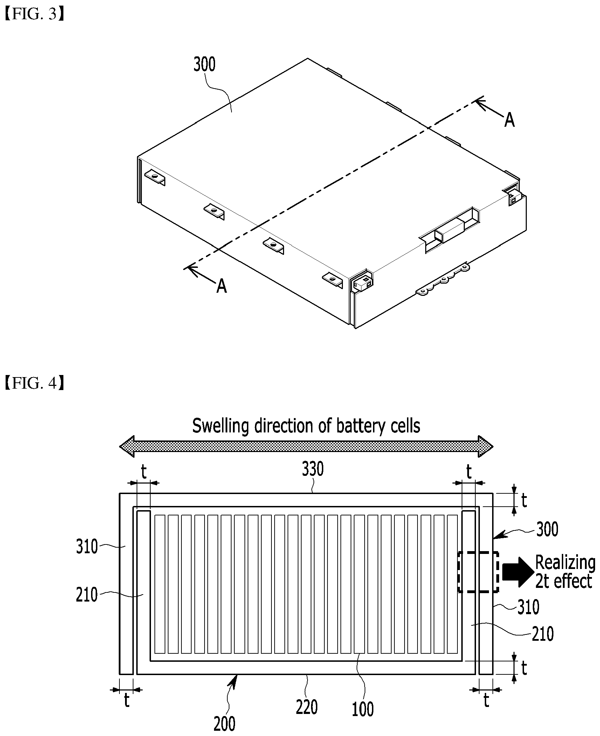

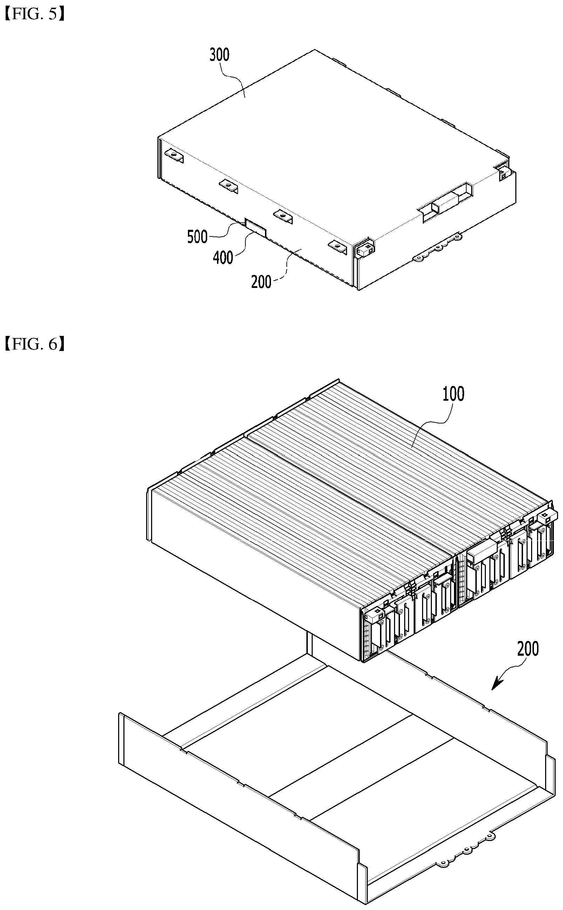

FIG. 2 is an exploded perspective view showing a battery module according to an embodiment of the present disclosure. FIG. 3 is a view showing a state in which the battery module according to an embodiment of the present disclosure is assembled. FIG. 4 shows section A-A of FIG. 3 and is a cross-sectional view of the battery module according to an embodiment of the present disclosure. FIG. 5 is a view showing a battery module according to another embodiment of the present disclosure.

Referring to FIGS. 2 to 5, a battery module according to an embodiment of the present disclosure includes a battery cell stack 100 in which a plurality of battery cells are stacked, a first frame 200 which is formed of a lower surface, and left and right surfaces to cover a lower surface and left and right surfaces of the battery cell stack 100; and a second frame 300 of which an upper surface, and front, rear, left and right surfaces are integrally formed to cover an upper surface and front and rear surfaces of the battery cell stack and the left and right surfaces of the first frame 200.

The battery cell is a secondary battery and may be configured as a pouch-type secondary battery. Such a battery cell may be composed of a plurality of cells, and the plurality of battery cells may be stacked together so as to be electrically connected to each other, thereby forming the battery cell stack 100. Each of the plurality of battery cells may include an electrode assembly, a battery case, and an electrode lead protruding from the electrode assembly.

According to an embodiment of the present disclosure, the battery module includes the first and second frames 200 and 300 for covering the battery cell stack 100. The first frame 200 is integrally formed of first frame-left and right surfaces 210 and a first frame-lower surface 220, and are formed so as to cover the lower surface and the left and right surfaces of the battery cell stack 100.

The second frame 300 is configured such that second frame-left and right surfaces 310, second frame-front and rear surfaces 320, and a second frame-upper surface 330 are integrally formed to cover the upper surface and front and rear surfaces of the battery cell stack 100 and the left and right surfaces 210 of the first frame 200.

According to an embodiment of the present disclosure, the second frame-upper surface 330 may be formed wider the first frame-lower surface 220, so that the second frame-left and right surfaces 310 cover the first frame-left and right surfaces 210.

Conventionally, the frame structure formed in the stacking direction of the battery cell stack is formed of a single frame structure, and thus, it was difficult to prevent a swelling of the battery module when swelling occurs.

Thus, according to an embodiment of the present disclosure, a double frame structure composed of the left and right surfaces 210 of the first frame 200 and the left and right surfaces 310 of the second frame 300 is formed in the stacking direction of the battery cell stack 100, and a reinforced double frame structure is formed in the stacking direction of the battery cells that are vulnerable to swelling, thereby effectively preventing a swelling of the battery module when swelling of battery cells occurs.

Further, conventionally, as the frame for covering the battery cell stack, a structure in which plural components of a U-shaped frame, an upper plate, and two end plates are assembled to cover the battery cell stack is known, but the conventional structure that couples plural components has the disadvantages in that it is likely to deteriorate the strength of the frame, all of the plural components have to be assembled, and an assembling line become longer during welding or bolting, which makes an assembling process complicated.

Thus, according to an embodiment of the present disclosure, since a battery module structure is formed so as to cover the battery cell stack 100 with only two first and second frames 200 and 300, the frame structure can be integrated and simplified, the end plates can be replaced by the front and rear surfaces 320 of the second frame 300, and the upper plate can be replaced by the upper surface 330 of the second frame 300, thereby reducing the number of the frame components, reducing the number of the assembling processes of the frame components, and remarkably improving poor quality problems that may occur in a complicated assembling process.

According to an embodiment of the present disclosure, the first frame 200 and the second frame 300 may be coupled by welding. At this time, the first and second frames 200 and 300 may be coupled by welding a portion where the lower ends of the front, rear, left and right surfaces of the second frame 300 make contact with the first frame 200. More specifically, lower ends of the left and right surfaces of the first frame 200 and lower ends of the left and right surfaces of the second frame 300, and front and rear ends of the lower surface of the first frame 200 and lower ends of the front and rear surfaces of the second frame 300 can be coupled by welding.

Welding can be performed using a laser, and the first frame 200 and the second frame 300 are sealed by welding to interrupt electrical connection between the inside and the outside of the battery module. Further, since the left and right surfaces of the first frame 200 and the left and right surfaces of the second frame 300 are doubly coupled, at the time of welding the lower ends of the left and right surfaces of the first frame 200 and the lower ends of the left and right surfaces of the second frame 300, a laser beam enters the inside of the battery module, or it is difficult for spatter generated during welding to flow into the battery module.

Thicknesses of frame surfaces of the first frame 200 and the second frame 300 may be identical to each other. The left and right surfaces 210 of the first frame 200 and the left and right surfaces 310 of the second frame 300 may be disposed so as to be perpendicular to the stacking direction of the battery cell stack 100.

FIG. 5 shows another embodiment of the present disclosure. Referring to FIG. 5, the battery module according to another embodiment of the present disclosure may be configured such that a guide 400 is formed to be protruded at lower ends of the left and right surfaces of the first frame 200, a guide insertion part 500, into which the guide 400 is inserted, is formed to be recessed at lower ends of the left and right surfaces of the second frame 300 corresponding to the guide 400, and the guide 400 is inserted into the guide insertion part 500.

Therefore, at the time of assembling the second frame 300 to the first frame 200 in which a battery cell stack 100 is assembled, the second frame 300 can be assembled to the first frame 200 in conformity to the guide 400 formed in the first frame 200. An assembly accuracy can be improved by assembling via the guide 400, and the assembly strength can be reinforced by the protruded and formed guide 400.

Hereinafter, a method of assembling a battery module according to an embodiment of the present disclosure will be described with reference to FIGS. 6 to 8.

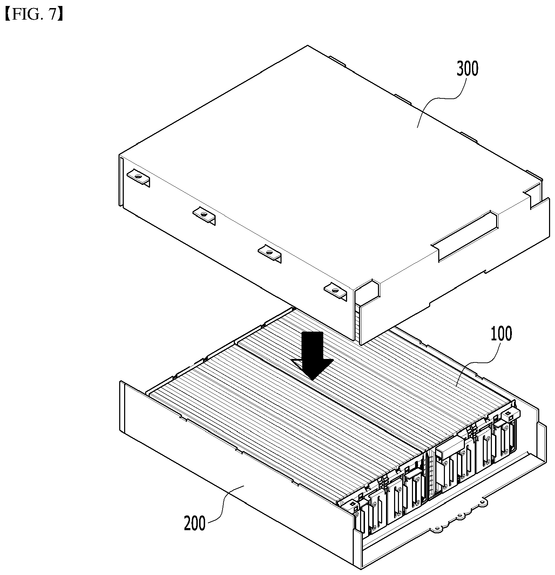

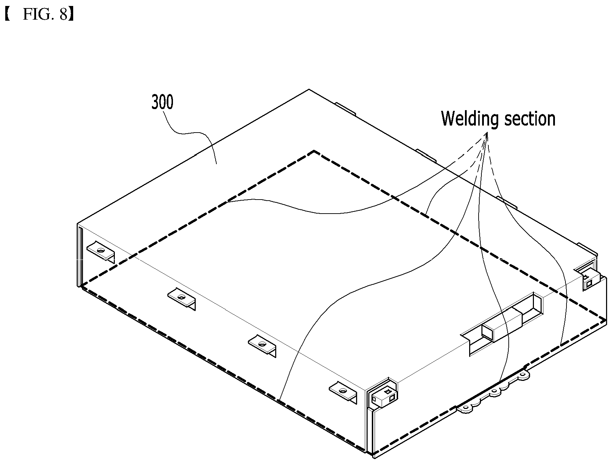

FIG. 6 is a view showing a state in which a battery cell stack is assembled to a first frame in accordance with an embodiment of the present disclosure. FIG. 7 is a view showing a state in which the first frame is assembled to the structure assembled through FIG. 6. FIG. 8 is a view showing a state in which the first and second frames are coupled by welding the structure assembled through FIG. 7.

Referring to FIGS. 6 to 8, a method of assembling a battery module according to an embodiment of the present disclosure includes a step of assembling a battery cell stack 100 on a first frame 200 formed of a lower surface and left and right surfaces (FIG. 6), a step of assembling a second frame 300, of which the upper surface and the front, rear, left and right surfaces are integrally formed, so as to cover the upper surface and the front and rear surfaces of the battery cell stack 100 and the left and right surfaces of the first frame 200 (FIG. 7); and a step of weld-coupling the first frame 200 and the second frame 300 (FIG. 8).

According to an embodiment of the present disclosure, the first frame 200 and the second frame 300 may be formed by a pressing process. The first and second frames 200 and 300 may be formed of the same material. Thereby, when manufacturing the frame components, the first and second frames 200 and 300 can be manufactured in a single process to simplify a manufacturing process and reducing a poor quality.

According to an embodiment of the present disclosure, in the step of weld-coupling the first frame 200 and the second frame 300, lower ends of the left and right surfaces of the first frame 200 and lower ends of the left and right surfaces of the second frame 300, and front and rear ends of the lower surface of the first frame 200 and lower ends of the front and rear surfaces of the second frame 300 may be welded to each other. The contents concerning a welding section are shown in FIG. 8.

Conventionally, there was a problem that the frame structure has to be assembled through a complicated assembling process in which a battery cell stack is inserted into an interior of a U-shaped frame, an upper plate is assembled on an upper side of the battery cell stack, the upper plate and the U-shaped frame are welded to each other, a first end plate is assembled, the first end plate, the U-shaped frame and the upper plate are welded to each other, a second end plate is assembled, and the second end plate, the U-shaped frame and the upper plate are welded to each other.

However, according to an embodiment of the present disclosure, since the battery module has a structure capable of covering the battery cell stack 100 by only two frame components of the first and second frames 200 and 300, the battery module frame structure can be formed through a simple assembling process of inserting the battery cell stack 100 into the second frame 300, assembling the first frame 200 to the second frame 300 and then welding the first and second frames 200 and 300, whereby a welding process can be simplified as compared with the related art and the manufacturing process can be simplified, thereby reducing a defect rate of products

The above-mentioned battery module can be included in the battery pack. The battery pack may have a structure in which one or more of the battery modules according to the present embodiment are gathered, and packed together with a battery management system (BMS) and a cooling device that control and manage battery's temperature, voltage, etc.

The battery pack can be applied to various devices. Such a device may be applied to a transportation means such as an electric bicycle, an electric vehicle, or a hybrid vehicle, but the present disclosure is not limited thereto, and is applicable to various devices that can use a battery module, which also belongs to the scope of the present disclosure.

Although the invention has been shown and described with reference to the preferred embodiments, the scope of the present disclosure is not limited thereto, and numerous other modifications and embodiments can be devised by those skilled in the art that will fall within the spirit and scope of the principles of the invention described in the appended claims. Further, these modified embodiments should not be understood individually from the technical spirit or perspective of the present disclosure.

### [Description of Reference Numerals]

- 100:: battery cell stack
- 200:: first frame
- 210:: first frame-left and right surfaces
- 220:: first frame-lower surface
- 300:: second frame
- 310:: second frame-left and right surfaces
- 320:: second frame-front and rear surfaces
- 330:: second frame-upper surface
- 400:: guide
- 500:: guide insertion part

## Claims

1. A battery module comprising:
a battery cell stack in which a plurality of battery cells are stacked,
a first frame which is formed of a lower surface, and left and right surfaces to cover a lower surface and left and right surfaces of the battery cell stack; and
a second frame of which an upper surface, and front, rear, left and right surfaces are integrally formed to cover an upper surface and front and rear surfaces of the battery cell stack, and the left and right surfaces of the first frame.

2. The battery module according to claim 1,
wherein lower ends of the left and right surfaces of the first frame and lower ends of the left and right surfaces of the second frame, and front and rear ends of the lower surface of the first frame and lower ends of the front and rear surfaces of the second frame are coupled by welding.

3. The battery module according to claim 1,
wherein thicknesses of frame surfaces of the first frame and the second frame are identical to each other.

4. The battery module according to claim 1,
wherein a guide is formed to be protruded at lower ends of the left and right surfaces of the first frame,
a guide insertion part, into which the guide is inserted, is formed to be recessed at lower ends of the left and right surfaces of the second frame corresponding to the guide, and
the guide is inserted into the guide insertion part.

5. The battery module according to claim 1,
wherein the left and right surfaces of the first frame and the left and right surfaces of the second frame are arranged so as to be perpendicular to the stacking direction of the battery cell stack.

6. The battery module according to claim 1,
wherein the upper surface of the second frame is formed wider than the lower surface of the first frame.

7. A method for manufacturing a battery module, the method comprising steps of:
assembling a battery cell stack on a first frame formed of a lower surface and left and right surfaces;
assembling a second frame, of which the upper surface and the front, rear, left and right surfaces are integrally formed, so as to cover the upper surface and the front and rear surfaces of the battery cell stack and the left and right surfaces of the first frame; and
weld-coupling the first frame and the second frame.

8. The method for manufacturing a battery module according to claim 7,
wherein the first frame and the second frame are formed by a pressing process.

9. The method for manufacturing a battery module according to claim 7,
wherein in the step of weld-coupling the first frame and the second frame, lower ends of the left and right surfaces of the first frame and lower ends of the left and right surfaces of the second frame, and front and rear ends of the lower surface of the first frame and lower ends of the front and rear surfaces of the second frame are welded.

10. A battery pack comprising the battery module as set forth in claim 1.
